# EUROPÄISCHE PATENTANMELDUNG

(11) **EP 3 656 241 A1**
(43) Veröffentlichungstag der Anmeldung: **27.05.2020**
(21) Anmeldenummer: 18208327.9
(22) Anmeldetag: 26.11.2018
(51) Int. Cl.: A43C 15/16, B60C 11/16, A01L 7/04

(54) **STOLLEN SOWIE TRÄGERELEMENT FÜR EINEN SOLCHEN**

(71) Anmelder: Strasser Maschinenbau GmbH, 88276 Berg/Ravensburg (DE)
(72) Erfinder: Strasser, Karl-Heinz, 88276 Berg (DE)
(74) Vertreter: Engelhardt, Volker

(57) **Zusammenfassung**

Bei einem Stollen (2) mit einem Haltezapfen (4) und mit einem daran befestigten Zahn (3), deren jeweilige Symmetrieachsen (5) koaxial zueinander verlaufen, soll durch diesen zum einen eine zuverlässige Kraftübertragung zwischen dem Tragelement (1) und einem Untergrund über den jeweiligen Stollen (2) erfolgen und zum anderen soll das Auswechseln bzw. Einsetzen der Stollen (2) an den Tragelementen (1) zeitsparend und unkompliziert vorgenommen werden können.

Dies ist dadurch erreicht, dass der Haltezapfen (4) bezogen auf den Abstand zu dessen Symmetrieachse (5) zwei unterschiedlich groß bemessene Abschnitte (11, 12) aufweist, dass der erste dem Zahn (3) zugewandte Abschnitt (11) aus einem kleineren Durchmesser als die Außenkontur des Zahnes (3) besteht, dass der zweite dazu benachbarte Abschnitt (12) des Haltezapfens (4) einen kleineren Durchmesser aufweist als der erste Abschnitt (11) und dass an dem zweiten Abschnitt (12) mindestens ein Vorsprung, Nase oder Nocke (13) angeformt oder vorhanden ist, der aus dem von dem zweiten Abschnitt (12) gebildeten Umfang (15) bereichsweise radial absteht.

## Beschreibung

Die Erfindung bezieht sich auf einen Stollen nach dem Oberbegriff des Patentanspruchs 1 sowie auf ein Trägerelement für einen solchen Stollen nach dem Oberbegriff des Patentanspruchs 5.

Derartige Stollen werden seit langem verwendet, um die Reibung beispielsweise zwischen der Unterseite eines Schuhs oder eines Hufeisens mit einem Untergrund zu verbessern, so dass die Schuhe bzw. Hufeisen als Trägerelement für solche Stollen die von einem Lebewesen aufgebrachte Bewegungskraft optimal an den Untergrund weiterleiten, wodurch die Standfestigkeit sowie die Vorwärtsbeschleunigung des Lebewesens durch die Stollen und die verwendeten Trägerelemente für die Stollen verbessert ist. Es ist auch bekannt, solche Stollen, die dann als sogenannte Spikes bezeichnet sind, an Autoreifen zu befestigen, um auf schneebedeckten oder eisigen Fahrbahnen eine verbesserte Reibung zwischen den Reifen und der rutschigen Straßenoberfläche zu erreichen.

Beispielsweise kann aus der DE 102 61 085 A1 entnommen werden, dass solche Stollen mittels senkrecht von diesem abstehenden Rastverbindungen an einem Hufeisen befestigt werden können.

Der DE 199 59 846 A1 ist eine formschlüssige Wirkverbindung zwischen einem Hufeisen und einen oder mehreren Stollen zu entnehmen, die über zwei ineinandergreifenden Gewinde fixiert sind.

Darüber hinaus ist es hinlänglich bekannt, solche Stollen an Fußballstiefel lösbar zu montieren, um zunächst die Reibung zwischen dem Fußballschuh und einem nassen Rasen als Untergrund zu verbessern. Je nachdem welche Eindringtiefe die Stollen aufweisen sollen bzw. welche Beschaffenheit der Untergrund hat, sind unterschiedliche Stollen an den Fußballschuhen zu befestigen.

Somit sollen die Stollen auswechselbar sein, um eine möglichst optimale Kraftübertragung zwischen dem jeweiligen Trägerelement, das als Schuh, Hufeisen oder Autoreifen ausgebildet sein kann, und dem Untergrund zu gewährleisten.

Ausgehend von dieser Aufgabenstellung haben sich die vorerwähnten Offenbarungen mit einer lösbaren Wirkverbindung zwischen dem Stollen und einem Trägerelement befasst. Die in dem zitierten Stand der Technik beschriebenen form- oder kraftschlüssigen Arretierungen zwischen den jeweiligen Stollen und dem Trägerelement hat sich jedoch als nachteilig erwiesen, da entweder der Wechselvorgang äußerst mühselig und folglich zeitaufwendig ist und/oder da die verwendeten Verbindungsarten keine dauerhafte und zuverlässige Kraftübertragung zwischen dem Stollen und dem jeweiligen Trägerelement aufweisen. Bei sogenannten Rastverbindungen besteht nämlich die Möglichkeit, dass die senkrecht abstehenden Raststifte bei einer entsprechenden Krafteinwirkung abbrechen und folglich die Verbindung zwischen dem Stollen und dem Trägerelement verloren geht. Darüber hinaus sind die Raststifte in entsprechend ausgestaltete Führungsnuten einzurasten. Da die Trägerelemente allerdings auf einem Untergrund verwendet werden, der oftmals verschlammt oder mit sonstigen Verunreinigungen, beispielsweise Steine, Fruchtreste oder sonstigen Abfallprodukten, übersät ist, können diese Bestandteile das Trägerelement und die darin eingearbeiteten Führungsnuten verschmutzen, so dass die Stollen in diese nicht mehr eingeführt werden können, ohne zumindest vorher die Rastnuten zu säubern.

Wenn zwischen dem jeweiligen Stollen und dem Trägerelement ein Arretierungsgewinde vorgesehen ist, hat sich als nachteilig herausgestellt, dass die Stollen sehr zeitaufwendig in die Gewindegänge zu positionieren und nachfolgend einzutreten sind. Das Verschmutzungsproblem für die Gewindegänge ist bei einer solchen konstruktiven Ausgestaltung des Trägerelementes zudem weiter erhöht, da die Gewindegänge ohne weiteres Schmutzanhaftungen aufnehmen und dieser Schmutzanhaftungen in die Gewindegänge eindringen und diese verstopfen.

Es ist daher Aufgabe der Erfindung, einen Stollen sowie ein Trägerelement für einen solchen Stollen der eingangs genannten Gattungen zur Verfügung zu stellen, durch die zum einen eine zuverlässige Kraftübertragung zwischen dem Trägerelement und einem Untergrund über den jeweiligen Stollen erfolgt und zum anderen das Auswechseln bzw. Einsetzen der Stollen an den Trägerelementen zeitsparend und unkompliziert vorgenommen werden kann.

Diese Aufgabe ist durch die Merkmale des kennzeichnenden Teils von Patentanspruch 1 gelöst.

Weitere vorteilhafte Weiterbildungen der Erfindung ergeben sich aus den Unteransprüchen.

Dadurch, dass der Haltezapfen bezogen auf den Abstand zu dessen Symmetrieachse zwei unterschiedlich groß bemessene Abschnitte aufweist, dass der erste dem Zahn zugewandte Abschnitt einen kleineren Durchmesser als die Außenkontur des Zahnes ist, dass der zweite dazu benachbarte Abschnitt des Haltezapfens einen kleineren Durchmesser aufweist als der erste Abschnitt und dass an dem zweiten Abschnitt mindestens ein Vorsprung, Nase oder Nocke angeformt oder vorhanden ist, der aus dem von dem zweiten Abschnitt gebildeten Umfang bereichsweise radial absteht, ist erreicht, dass zum einen die Stollen und das Trägerelement eine dauerhafte und zuverlässige Wirkverbindung miteinander eingehen, wodurch die zu übertragenden Kräfte von dem Trägerelement auf den jeweiligen Untergrund bzw. vice verse übertragen werden können und dass zum anderen die Stollen schnell und einfach aus- bzw. eingebaut werden können.

Es ist besonders zweckmäßig, wenn der erfindungsgemäße Stollen an einem Trägerelement, beispielsweise einem Schuh, einem Hufeisen oder einem Reifen für Fahrzeuge befestigt ist, denn dadurch entsteht eine zuverlässige und hochbelastbare Verbindung zwischen dem Trägerelement, dem Stollen und einem Untergrund mit unterschiedlicher Beschaffenheit, da der Zahn des Stollens in den Untergrund eindringen kann und dort nach Art eines Dornes eine formschlüssige Wirkverbindung zwischen diesem und dem Untergrund entsteht und der Haltezapfen des Stollens reibschlüssig mit dem Trägerelement verbunden ist. Daher sind in dem Trägerelement eine Vielzahl von Aufnahmeabschnitten eingearbeitet, deren Innenkonturen an die jeweiligen Außenkonturen des Haltezapfens angepasst sind. Da an dem zweiten Abschnitt des Haltezapfens ein oder mehrere Vorsprünge, Nasen oder Nocken vorhanden sind, die dadurch entstehen, dass der zweite Abschnitt exzentrisch zu der Symmetrieachse des Haltezapfens verläuft, entsteht eine Kontaktfläche an dem Außenumfang des zweiten Abschnittes. Diese Kontaktfläche liegt im montierten Zustand des Stollens an dem Trägerelement an der Innenwand der Aufnahmeöffnung, insbesondere an dem zweiten Aufnahmeabschnitt an, so dass zwischen diesen eine reibschlüssige Wirkverbindung entsteht.

Die Außenkontur des Stollens ist zumindest im Übergangsbereich, also zwischen dem Zahn und dem Haltezapfen, größer bemessen als die Außenkontur des Haltezapfens bzw. dessen ersten Abschnittes, so dass der Boden des Zahnes über die Außenkontur des Haltezapfens übersteht, wodurch ein Anschlag gebildet ist, durch den zum einen der Einsteckweg des Stollens in das Trägerelement begrenzt ist und zum anderen Drehmomente abgestützt werden können, die von dem Zahn an den Haltezapfen und das Trägerelement weitergeleitet sind bzw. umgeleitet.

In der Zeichnung ist ein erfindungsgemäßes Ausführungsbeispiel dargestellt, das nachfolgend näher erläutert ist. Im Einzelnen zeigt:
- Figur 1: ein Trägerelement in Form eines Schuhs, an dem ein an der Unterseite des Schuhs zugeordneter Stollen befestigt ist, der aus einem Zahn und einem Haltezapfen mit zwei unterschiedlich groß bemessenen Abschnitten gebildet ist, im montierten Zustand des Stollens an dem Trägerelement und teilweise im Schnitt,
- Figur 2: eine vergrößerte Darstellung zwischen der Unterseite des Trägerelementes und dem Stollen, im Schnitt,
- Figur 3: eine Draufsicht auf den Stollen, gemäß Figur 1,
- Figur 4: der Stollen gemäß Figur 3, im Schnitt mit einer beispielhaften Bemassung,
- Figur 5: der Stollen gemäß Figur 3, in einer perspektivischen Ansicht und
- Figur 6: der Stollen gemäß Figur 5, im Längsschnitt.

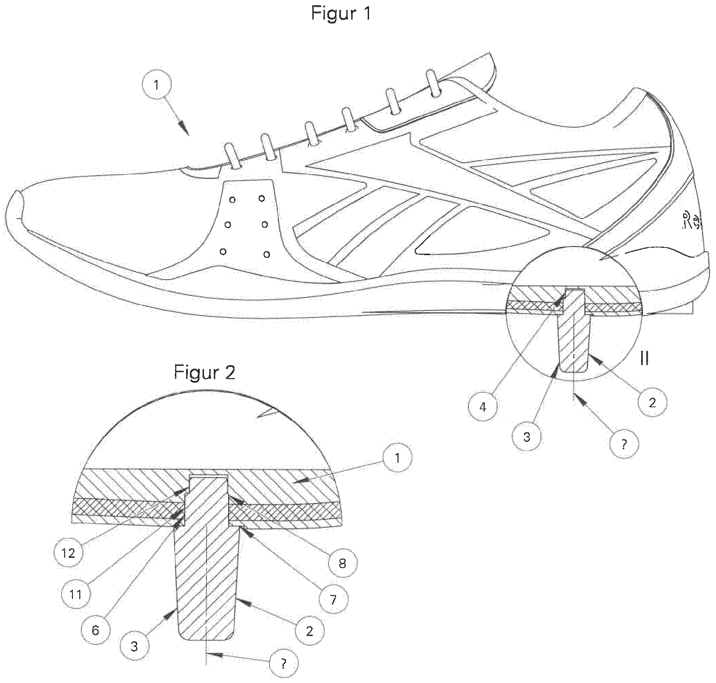

Aus den Figuren 1 und 2 ist ersichtlich, dass an einem Trägerelement 1 in Form eines Schuhs für einen menschlichen Fuß ein Stollen 2 befestigt ist. Durch die Anbringung des Stollens 2 an dem Trägerelement 1, das ebenso als Hufeisen, Reifen für Fahrzeuge oder dergleichen ausgestaltet sein kann, ist erreicht, dass zwischen der Unterseite des Trägerelements 1 und einem nicht dargestellten Untergrund eine erhöhte Kraftübertragung durch eine zumindest kraftschlüssige oder gar formschlüssige Wirkverbindung zwischen dem Stollen 2 und dem Untergrund erreicht werden kann.

Um den Stollen 2 möglichst zeitsparend ein- oder ausbauen zu können, also eine entsprechende Verbindung zwischen diesem und dem Trägerelement 1 herzustellen oder lösen zu können, weist der Stollen 2 einen dem Untergrund zugeordneten Zahn 3 und einen Haltezapfen 4 auf. Die Symmetrieachsen der Zähne 3 und des Haltezapfen 4 sind mit der Bezugsziffer 5 gekennzeichnet. Die Symmetrieachse 5 des Stollens 2 verläuft dabei im Wesentlichen senkrecht zu der Unterseite des Trägerelements 1, so dass der Stollen 2 möglichst senkrecht von diesem absteht.

Um den Stollen 2 bzw. dessen Haltezapfen 4 mit dem Trägerelement 1 verbinden zu können, sind in diesem eine Vielzahl von Aufnahmeöffnungen 6 eingearbeitet, die im Wesentlichen in zwei Aufnahmeabschnitte 7 und 8 unterteilt sind. Dabei sind die Innenkonturen der beiden Aufnahmeabschnitte 7 und 7 unterschiedlich groß bemessen. Der erste dem Untergrund benachbart angeordnete Aufnahmeabschnitt 7 weist einen größeren Durchmesser bzw. Innenkontur auf als der dazu benachbart verlaufende zweite Aufnahmeabschnitt 8.

Der Haltezapfen 4 besteht ebenso aus zwei Abschnitten 11 und 12 mit unterschiedlich groß bemessenen Außenkonturen oder Durchmessern. Dabei sind die Außenkonturen der beiden Abschnitte 11 und 12 derart ausgestaltet, dass der Haltezapfen 4 in die jeweilige Aufnahmeöffnung 6 eingesteckt - und wie dies nachfolgend näher erläutert ist - in dieser durch Verdrehen arretiert werden kann.

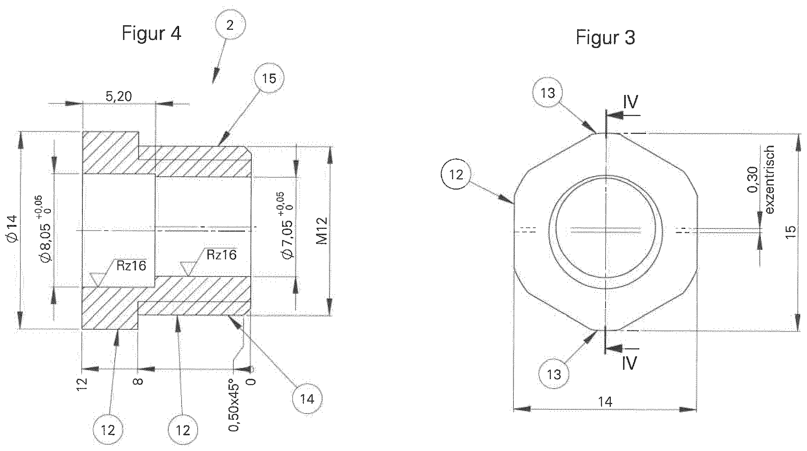

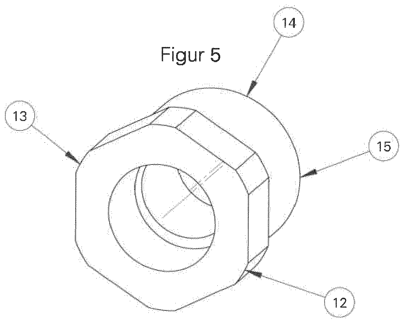

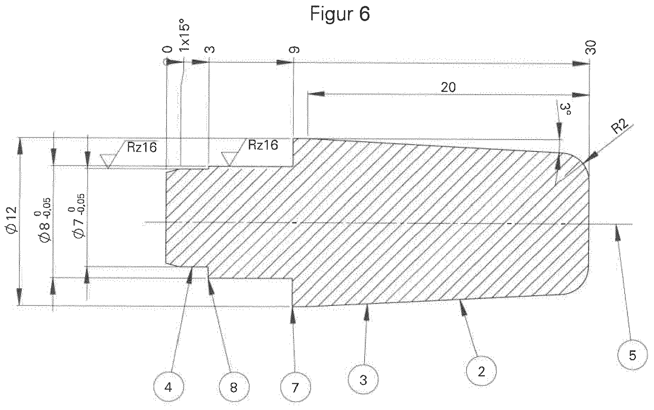

Insbesondere den Figuren 3, 4, 5 und 6 ist zu entnehmen, dass der zweite Abschnitte 12 des Haltezapfens 4 einen radial nach außen abstehenden Vorsprung, Nase oder Nocken 13 aufweisen, der dadurch entsteht, dass der zweite Abschnitt 12 exzentrisch zu der Symmetrieachse 5 des Haltezapfens 4 verläuft. Die Exzentrizität ist mit dem Buchstaben e bezeichnet und kann zwischen 0,1 und 0,5 Millimetern betragen. Im dargestellten Ausführungsbeispiel ist eine mittlere Exzentrizität e von 0,3 Millimetern gewählt. Der Durchmesser des zweiten Abschnittes 12 bildet demnach eine runde Anlagefläche, wobei ein mit der Bezugsziffer 14 und ein zweiter mit der Bezugsziffer 15 versehener Umfang des zweiten Abschnittes 12 entsteht. Der lineare Abstand der beiden Umfänge 14 und 15 ist folglich bezogen auf die Symmetrieachse unterschiedlich groß ausgebildet.

Der zweite Aufnahmeabschnitt 8 ist dabei tangential versetzt mit der gleichen Exzentrizität e verlaufend zu der Symmetrieachse 5 ausgestaltet, wodurch gewährleistet ist, dass der zweite Abschnitt 12 in den zweiten Aufnahmeabschnitt 8 einsetzbar ist, denn während des Einsteckvorgangs kann durch Verdrehen des Haltezapfens 4 eine entsprechend fluchtende Ausrichtung, also ein Ausgleich der vorhandenen identischen Exzentrizität e erreicht sein, und anschließend, also sobald der zweite Abschnitt 12 des Haltezapfens 4 vollständig in den zweiten Aufnahmeabschnitt 8 eintaucht durch ein weiteres Verdrehen eine kraftschlüssige Wirkverbindung zwischen dem Haltezapfen 4 und der jeweiligen Aufnahmeöffnung 6 eingestellt werden. Die Exzentrizitäten e bewirken demnach, dass der zweite Abschnitt 12 in dem zweiten Aufnahmeabschnitt 8 reibschlüssig fixiert ist, denn die Exzentrizitäten e verlaufen nach der Montage des Stollens 2 an dem Trägerelement 1 versetzt zueinander, und zwar um einen Wirbel von 5° bis 20°.

Da folglich sämtliche Flächen der Innenkonturen der Aufnahmeöffnungen 6 und die beiden Abschnitte 11 und 12 keinerlei Hinterschneidungen, Einkerbungen oder sonstige Rastverbindungen aufweisen, kann sich in diesen kein Schmutz ablagern. Zudem benötigt der Benutzer der erfindungsgemäßen Bauteile keinerlei Werkzeuge oder sonstige Hilfsmittel, um den Stollen 2 an dem Trägerelement 1 zu befestigen bzw. davon zu lösen, denn ausschließlich durch ein manuelles Verdrehen werden die vorhandenen Exzentrizitäten e zueinander positioniert, und zwar entweder, dass diese fluchtend zueinander verlaufen um ein Herausziehen oder Hineinstecken des Stollens 2 in die Aufnahmeöffnung 6 bzw. eine dauerhafte und formstabile Wirkverbindung zwischen diesem und dem Trägerelement 1 zu erreichen, wenn nämlich durch Verdrehen die Exzentrizitäten zwischen dem zweiten Abschnitt 12 des Haltezapfens 4 und des zweiten Aufnahmeabschnittes 8 der jeweiligen Aufnahmeöffnung 6 zueinander bewegt sind.

Der Übergangsbereich zwischen dem Zahn 3 und dem Haltezapfen 4 ist mit der Bezugsziffer 10 gekennzeichnet. Die Außenkontur des Zahnes 3 ist im Übergangsbereich 10 größer bemessen als die Außenkontur des ersten Abschnittes 11, so dass die Unterseite des Zahnes 3, die dem Trägerelement 1 zugewandt ist und als Anlage dient, auf dem Trägerelement 1 anliegt. Sowohl beim Einführen des Stollens 2 in die Aufnahmeöffnung 6 begrenzt daher dieser Übergangsbereich 10 den Einfügeweg des Stollens 2 und gleichzeitig werden zu übertragende Kräfte oder Drehmomente, die zwischen dem Zahn 3 und dem Trägerelement 1 abzustützen sind, über diesen Übergangsbereich aufgenommen und flächig an das Trägerelement 1 weitergeleitet bzw. vice versa wird.

## Patentansprüche

1. Stollen (2) mit einem Haltezapfen (4) und mit einem daran befestigten Zahn (3), deren jeweilige Symmetrieachsen (5) koaxial zueinander verlaufen,
**dadurch gekennzeichnet,**
**dass** der Haltezapfen (4) bezogen auf den Abstand zu dessen Symmetrieachse (5) zwei unterschiedlich groß bemessene Abschnitte (11, 12) aufweist,
**dass** der erste dem Zahn (3) zugewandte Abschnitt (11) aus einem kleineren Durchmesser als die Außenkontur des Zahnes (3) besteht,
**dass** der zweite dazu benachbarte Abschnitt (12) des Haltezapfens (4) einen kleineren Durchmesser aufweist als der erste Abschnitt (11) und
**dass** an dem zweiten Abschnitt (12) mindestens ein Vorsprung, Nase oder Nocke (13) angeformt oder vorhanden ist, der aus dem von dem zweiten Abschnitt (12) gebildeten Umfang (15) bereichsweise radial absteht.

2. Stollen nach Anspruch 1,
**dadurch gekennzeichnet,**
**dass** die Vorsprünge, Nasen oder Nocken (13) eine Kontaktfläche bilden, deren Außenkonturen auf einem gemeinsamen Umfang liegen.

3. Stollen nach Anspruch 1,
**dadurch gekennzeichnet,**
**dass** der Übergangsbereich (10) zwischen dem Zahn (3) und dem Haltezapfen (4) als Anschlag ausgebildet ist und dass der Übergangsbereich (10) im montierten Zustand des Stollens (2) an einem Trägerelement (1) an dessen Unterseite anliegt

4. Stollen nach einem der vorgenannten Ansprüche,
**dadurch gekennzeichnet,**
**dass** der Vorsprung, Nase oder Nocke (13) als Exzentrizität (e) bezogen auf die Symmetrieachse (5) des Haltesystems ausgebildet ist, wobei die Exzentrizität (e) vorzugsweise zwischen 0,1 und 0,5 Millimetern beträgt und/oder wobei die Exzentrizität (e) in einem Winkelbereich von vorzugsweise 15 ° bis 30 ° verläuft.

5. Trägerelement (1), insbesondere Schuh, Hufeisen oder Reifen, in das mindestens eine Aufnahmeöffnung (6) eingearbeitet ist, in die ein in einen Haltezapfen (4) eines Stollens (2) einsteckbar und in diesem arretierbar ist,
**dadurch gekennzeichnet,**
**dass** die Aufnahmeöffnungen (6) aus zwei Aufnahmeabschnitten (7, 8) besteht, dass der erste der Oberseite des Trägerelementes (1) zugewandte Aufnahmeabschnitt (7) eine größere Innenkontur oder Durchmesser als der die zweite dazu benachbarte Aufnahmeabschnitt (8) aufweist, und die Außenkontur der beiden Abschnitte (7, 8) des Haltezapfens (4) an die Innenkonturen bzw. Durchmesser der beiden Aufnahmeabschnitte (7, 8) derart angepasst sind,
**dass** der Haltezapfen (4) des Stollens (2) in diese einsetzbar und durch Verdrehen in eine kraftschlüssige Wirkverbindung mit dem Trägerelement (1) überführbar ist.

6. Trägerelement (1) nach Anspruch 3,
**dadurch gekennzeichnet,**
**dass** die durch eine Exzentrizität (e) gebildeten Vorsprünge, Nocken oder Nasen (13) an dem zweiten Abschnitt (12) des Haltezapfens (4) eine Kontaktfläche aufweisen, die an der Innenseite des zweiten Aufnahmeabschnitts (12) reibschlüssig in Wirkkontakt stehen.
